# EUROPEAN PATENT APPLICATION

(11) **EP 4 678 281 A1**
(43) Date of publication of application: **14.01.2026**
(21) Application number: 24766989.8
(22) Date of filing: 28.02.2024
(51) Int. Cl.: B01J 20/22, C01G 3/08

(54) **METAL ORGANIC STRUCTURE**

(30) Priority: 08.03.2023 JP 2023035785
(71) Applicant: Sumitomo Chemical Company, Limited, Tokyo 103-6020 (JP)
(72) Inventor: KIKUCHI, Yuta, Ichihara-shi, Chiba 299-0195 (JP)
(74) Representative: Vossius & Partner Patentanwälte Rechtsanwälte mbB
(86) International application number: PCT/JP2024/007322
(87) International publication number: WO 2024/185618

(57) **Abstract**

An object of the present disclosure is to provide a metal organic framework having an excellent desorption performance of adsorbed substances. A metal organic framework comprising an organic ligand and a metal ion, wherein in a diffraction spectrum obtained from X-ray diffraction measurement within a range of 2θ=3 to 40°, a half width of a most intense peak is 0.05 to 0.225°, and a glass adhesion rate calculated by the following measurement method is 0 to 20% by mass,
[measurement of glass adhesion rate]
when 100 mg of a sample of the metal organic framework is placed into a vertically erected glass tube having a diameter of 6 mm and a length of 200 mm through an upper end thereof, a glass adhesion rate is defined as a mass fraction of the sample adhered to an insi de of the glass tube relative to a mass of the placed sample.

## Description

### TECHNICAL FIELD

The present disclosure relates to a metal organic framework.

### BACKGROUND ART

Metal organic frameworks are also referred to as porous coordination polymers and are a class of materials which form porous structures by coordinate bonds between metal ions and organic ligands, and are expected to adsorb and desorb gas and expected to be applied to catalysts, etc.

For example, Patent Literature 1 discloses a metal organic framework obtained by supplying a solid mixture including metal salts and multidentate organic ligands, mulling or milling the mixture for a sufficient time to allow the formation of a powdered precursor of the metal organic framework, and further heating the powdered precursor at a sufficient temperature and for a sufficient time to allow the powdered precursor to be converted into the metal organic framework.

### CITATION LIST

### PATENT LITERATURE

Patent Literature 1: WO2020/159631

### SUMMARY OF THE INVENTION

### PROBLEMS TO BE SOLVED BY THE INVENTION

After the metal organic framework (hereinafter, may be referred to as MOF) has adsorbed substances such as water, carbon dioxide, and hydrogen, the MOF is heated to the specific temperature to allow the adsorbed substances to be desorbed from the MOF, thereby enabling regeneration and use of the MOF. In this case, it is desired that the adsorbed substances can be desorbed efficiently.

The above-described Patent Literature 1 discloses the powder form of the obtained metal organic framework, and the difference in crystallinity compared to the precursor. However, the desorption properties of adsorbed substances have not been studied at all.

Therefore, an object of the present disclosure is to provide a metal organic framework having an excellent desorption performance of adsorbed substances.

### SOLUTION TO THE PROBLEMS

The present disclosure that can achieve the problem is as follows.
[1] A metal organic framework comprising
   an organic ligand and a metal ion, wherein
   in a diffraction spectrum obtained from X-ray diffraction measurement within a range of 2θ=3 to 40°, a half width of a most intense peak is 0.05 to 0.225°, and
   a glass adhesion rate calculated by the following measurement method is 0 to 20% by mass,
   [measurement of glass adhesion rate]
   when 100 mg of a sample of the metal organic framework is placed into a vertically erected glass tube having a diameter of 6 mm and a length of 200 mm through an upper end thereof, a glass adhesion rate is defined as a mass fraction of the sample adhered to an inside of the glass tube relative to a mass of the placed sample.
[2] The metal organic framework according to [1], wherein
   the organic ligand includes at least one selected from the group consisting of carboxylates represented by R(COO⁻)ₙ (R represents an n-valent group and n represents an integer of 2 or more) and an oxalate ion (COO⁻)₂.
[3] The metal organic framework according to [1] or [2], wherein
   the metal ion includes an ion of at least one metal selected from elements in periods 3 to 6 and groups 2 to 14 of the periodic table.
[4] The metal organic framework according to [1], wherein
   the organic ligand includes at least one selected from R(COO⁻)₃ (R represents an aromatic hydrocarbon group having no functional group and R has 6 or more and 10 or less carbon atoms), and the metal ion includes an ion (particularly, a Cu ion) of at least one metal selected from the group consisting of Cu, Al, Ti, V, Fe, Co, Ni, and Zr.

### ADVANTAGEOUS EFFECTS OF THE INVENTION

According to the present disclosure, the half width of the most intense peak obtained from X-ray diffraction measurement, and a glass adhesion rate calculated by a predetermined measurement method are adjusted appropriately, so that the adsorbed substances can be desorbed efficiently.

### DESCRIPTION OF EMBODIMENTS

### (1) Metal organic framework

A metal organic framework of the present disclosure includes an organic ligand and a metal ion. In a diffraction spectrum obtained from X-ray diffraction measurement within a range of 2θ=3 to 40°, the half width of the most intense peak is 0.05 to 0.225°, and a glass adhesion rate calculated by a measurement method described below is 0 to 20% by mass.

### [Measurement of glass adhesion rate]

When 100 mg of a sample of the metal organic framework is placed into a vertically erected glass tube having a diameter of 6 mm and a length of 200 mm through an upper end thereof, a glass adhesion rate is defined as the mass fraction of the sample adhered to the inside of the glass tube relative to the mass of the placed sample.

### (1-1) Organic ligand

Examples of a functional group X in the organic ligand capable of coordinating with the metal ion include -COOH, a carboxylic anhydride group, -OH, -OR¹¹, -NH₂, - NHR¹¹, -N(R¹¹)₂, -CN, a halogeno group, -C(=S)SH, -C(=O)SH and a tautomer thereof, - SO₃H, and -S-S- (each R¹¹ represents an alkyl group having 1 or 2 carbon atoms). It is preferable that the organic ligand is a multidentate ligand and includes -COOH as the functional group X. More specifically, the organic ligand preferably includes at least one selected from the group L1 consisting of carboxylates (carboxylato) represented by R(COO⁻)ₙ (R represents an n-valent group and n represents an integer of 2 or more) and an oxalate ion (COO⁻)₂, and more preferably includes at least one selected from said R(COO⁻)ₙ.

The R preferably represents an aliphatic linear hydrocarbon group, an aliphatic cyclic hydrocarbon group, an aliphatic heterocyclic hydrocarbon group (group in which one or more carbon atoms of an aliphatic cyclic hydrocarbon group are substituted with heteroatoms), an aromatic hydrocarbon group, or an aromatic heterocyclic hydrocarbon group (group in which one or more carbon atoms of an aromatic hydrocarbon group are substituted with heteroatoms). The aliphatic linear hydrocarbon group may have a straight chain structure or a branched chain, and may be a saturated hydrocarbon group or an unsaturated hydrocarbon group. A heteroatom in the aliphatic heterocyclic hydrocarbon group or the aromatic heterocyclic hydrocarbon group is preferably nitrogen.

Furthermore, n is preferably 2 or more and 4 or less, more preferably 2 or more and 3 or less, and most preferably 3.

The above-described aliphatic linear hydrocarbon group, aliphatic cyclic hydrocarbon group, aliphatic heterocyclic hydrocarbon group, aromatic hydrocarbon group, and aromatic heterocyclic hydrocarbon group may further include one or more functional groups Y selected from the group consisting of a carboxylic anhydride group, -OH, -OR¹², - NH₂, -NHR¹², -N(R¹²)₂, -CN, a halogeno group, -C(=S)SH, -C(=O)SH and a tautomer thereof, -SO₃H, and -S-S-. Each R¹² represents an alkyl group having 1 or 2 carbon atoms.

Examples of the aromatic heterocyclic hydrocarbon group include pyrrole, pyrazole, imidazole, thiazole, oxazole, pyridine, pyrimidine, pyridazine, pyrazine, and triazine.

The R preferably represents an aromatic hydrocarbon group that may have the functional group Y, preferably represents an aromatic hydrocarbon group having no functional group Y, and more preferably represents an aromatic hydrocarbon group having no functional group.

The number of carbon atoms in the R is preferably 3 or more and more preferably 6 or more, and is preferably 30 or less, more preferably 24 or less, further preferably 18 or less, even more preferably 12 or less, and most preferably 10 or less. That is, the number of carbon atoms in R is preferably 3 to 30, 6 to 24, 6 to 18, 6 to 12, or 6 to 10.

The organic ligand preferably includes at least one selected from R(COO⁻)ₙ, in which R is an aromatic hydrocarbon group having no functional group and R has 6 or more and 12 or less carbon atoms (particularly, 6 or more and 10 or less), and n is more preferably 3.

The organic ligand preferably includes a ligand in which two protons are removed from two carboxyl groups (-COOH) of dicarboxylic acid or a ligand in which three protons are removed from three carboxyl groups of tricarboxylic acid, and more preferably includes the ligand in which three protons are removed from three carboxyl groups of tricarboxylic acid.

Examples of the dicarboxylic acid include oxalic acid, succinic acid, fumaric acid, tartaric acid, 1,4-butanedicarboxylic acid, 1,4-butenedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid (phthalic acid), 1,3-benzenedicarboxylic acid (isophthalic acid), 2,3-pyridinedicarboxylic acid, 1,3-butadiene-1,4-dicarboxylic acid, 1,4-benzenedicarboxylic acid (terephthalic acid), 2-aminoterephthalic acid, 2,5-dihydroxyterephthalic acid, imidazole-2,4-dicarboxylic acid, 3,5-pyrazoledicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminodiphenylmethane-3,3'-dicarboxylic acid, quinoline-3,4-dicarboxylic acid, 7-chloro-4-hydroxyquinoline-2,8-dicarboxylic acid, diimide dicarboxylic acid, pyridine-2,6-dicarboxylic acid, 2-methylimidazole-4,5-dicarboxylic acid, thiophene-3,4-dicarboxylic acid, thiophene-2,5-dicarboxylic acid, 2,2'-dithiodibenzoic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-dihydroxybiphenyl-3,3'-dicarboxylic acid, 4,4'-diamino-1,1'-biphenyl-3,3'-dicarboxylic acid, 4,4'-diaminobiphenyl-3,3'-dicarboxylic acid, benzidine-3,3'-dicarboxylic acid, 1,4-bis(phenylamino)benzene-2,5-dicarboxylic acid, 1,1'-binaphthyl dicarboxylic acid, 7-chloro-8-methylquinoline-2,3-dicarboxylic acid, 1-anilinoanthraquinone-2,4'-dicarboxylic acid, polytetrahydrofuran 250-dicarboxylic acid, 1,4-bis(carboxymethyl) piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7-hexachloro-5-norbornene-2,3-dicarboxylic acid, phenylindandicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cis-dicarboxylic acid, 2,2'-biquinoline-4,4'-dicarboxylic acid, pyridine-3,4-dicarboxylic acid, 3,6,9-trioxaundecanedicarboxylic acid, hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, bis(4-aminophenyl) ether diimide-dicarboxylic acid, 4,4'-diaminodiphenylmethane diimide-dicarboxylic acid, bis(4-aminophenyl) sulfone diimide-dicarboxylic acid, 1,4-naphthalenedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2',3'-diphenyl-p-terphenyl-4,4"-dicarboxylic acid, (diphenyl ether)-4,4'-dicarboxylic acid, imidazole-4,5-dicarboxylic acid, 4(1H)-oxothiochromene-2,8-dicarboxylic acid, 5-tert-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, 2,5-dihydroxy-1,4-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxy-diphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubine-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1H-pyrrole-2,5-dicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, and camphordicarboxylic acid.

Examples of the tricarboxylic acid include tricarballylic acid, aconitic acid, trimellitic acid, trimesic acid (benzene-1,3,5-tricarboxylic acid), biphenyl-3,4',5-tricarboxylic acid, and 1,3,5-tris(4-carboxyphenyl)benzene, and benzene-1,3,5-tricarboxylic acid is particularly preferable.

The above-described organic ligand may include one or more organic ligands selected from the group L1 and may further include a different type of organic ligand, and examples of the different type of organic ligand include at least one selected from the group L2 consisting of urea, pyrazine, oxazole, isoxazole, thiazole, imidazole, pyrazole, 1,2,3-thiadiazole, pyridazine, pyrimidine, purine, pteridine, 2,2'-bipyridine, and 4,4'-bipyridine.

### (1-2) Metal ion

The metal ion preferably includes an ion of at least one metal selected from elements in periods 3 to 6 and groups 2 to 14 of the periodic table, more preferably includes an ion of at least one metal selected from the group consisting of Mg, Al, Ga, In, Ti, V, Cr, Mn, Fe, Co, Ni, Cu, Zn, Zr, and Hf, further preferably includes an ion of at least one metal selected from the group consisting of Cu, Al, Ti, V, Fe, Co, Ni, and Zr, and particularly preferably includes a Cu ion. In the present specification, the term "metal" is used to include a semimetal such as Si and Ge.

In the metal organic framework of the present disclosure, it is preferable that the organic ligand includes at least one organic ligand selected from R(COO⁻)₃ (R represents an aromatic hydrocarbon group having no functional group and R has 6 or more and 10 or less carbon atoms), and the metal ion includes an ion (particularly, a Cu ion) of at least one metal selected from the group consisting of Cu, Al, Ti, V, Fe, Co, Ni, and Zr.

The mole ratio P (organic ligand/metal ion) of the organic ligand to the metal ion is preferably less than or equal to five times the theoretical mole ratio P₀ (organic ligand/metal ion) at which the organic ligand and the metal ion combine to achieve electrical neutrality. That is, P/P₀ is preferably 5 or less, more preferably 3 or less, and further preferably 2 or less, and is preferably 0.8 or more. That is, P/P₀ is preferably 0.8 to 5, 0.8 to 3, or 0.8 to 2.

More specifically, the mole ratio (organic ligand/metal ion) of the organic ligand to the metal ion is preferably less than 3, and maintaining this range allows for uniform mixing of the metal ion and the organic ligand. The mole ratio is more preferably 2.5 or less, further preferably 2 or less, and even more preferably 1.5 or less, and is preferably 0.1 or more, more preferably 0.2 or more, and further preferably 0.3 or more. That is, the mole ratio (organic ligand/metal ion) of the organic ligand to the metal ion is preferably 0.1 or more and less than 3, 0.2 to 2.5, 0.3 to 2, or 0.3 to 1.5.

In order to adjust the mole ratio of the organic ligand to the metal ion, the ratio between the amount of metal ions in an ionic metal compound and the amount of an organic compound capable of forming coordination bonds with the metal ions, which are used in a production method described below, may be adjusted.

### (1-3) Half width

In a diffraction spectrum obtained from X-ray diffraction measurement of the metal organic framework of the present disclosure within a range of 2θ=3 to 40°, the half width of the most intense peak is 0.05 to 0.225°. In a case where the half width is in the range, the metal organic framework has good crystallinity. The half width is preferably 0.21° or less, more preferably 0.20° or less, and further preferably 0.17° or less. That is, the half width is preferably 0.05 to 0.21°, 0.05 to 0.20°, or 0.05 to 0.17°.

### (1-4) Glass adhesion rate

A glass adhesion rate is measured according to the following procedure.

### [Measurement of glass adhesion rate]

When 100 mg of a sample of the metal organic framework is placed into a vertically erected glass tube having a diameter of 6 mm and a length of 200 mm through an upper end thereof, the glass adhesion rate is defined as the mass fraction of the sample adhered to the inside of the glass tube relative to the mass of the placed sample.

It is preferable to use borosilicate glass for the glass tube, and specifically, a 3-1594-03 glass tube manufactured by AS ONE Corporation, which was used in Examples, can be cut into a 200 mm-long piece and used.

In addition, the temperature at which the glass adhesion rate is measured is preferably 15 to 40°C, and the relative humidity is preferably 20% to 80%.

In a case where the glass adhesion rate is 0 to 20% by mass and the half width is 0.05 to 0.225°, the substances adsorbed temporarily by the metal organic framework can be desorbed efficiently. In addition, in a case where the glass adhesion rate is in the range, the metal organic framework also exhibits excellent handling properties during collection from a manufacturing facility, transportation, storage, and the like. The glass adhesion rate is preferably 15% by mass or less, more preferably 10% by mass or less, and further preferably 7% by mass or less, and the lower limit of the glass adhesion rate may be 1% by mass. That is, it is preferable that the glass adhesion rate is 1 to 15% by mass, 1 to 10% by mass, or 1 to 7% by mass.

### (1-5) Desorption performance

In the case where the glass adhesion rate is 0 to 20% by mass and the half width is 0.05 to 0.225°, an effect that the substances adsorbed temporarily by the metal organic framework can be desorbed efficiently, is provided. More specifically, it enables the water desorption amount measured according to Examples described below to be 8.5% by mass or more. The water desorption amount is preferably 9% by mass or more and more preferably 11% by mass or more, and the upper amount of the water desorption amount may be, for example, 20% by mass. That is, the water desorption amount is preferably 8.5 to 20% by mass, 9 to 20% by mass, or 11 to 20% by mass.

### (2) Production method for metal organic framework

The metal organic framework of the present disclosure can be obtained by extruding a mixture of the organic compound capable of forming a coordination bond with a metal ion and the ionic metal compound. A counter anion in the ionic metal compound is an anion other than OH⁻, and it is important that the extrusion is performed under solvent-free and base-free conditions at a temperature of 60°C or higher.

### (2-1) Organic compound capable of forming coordination bond with metal ion

The organic compound capable of forming a coordination bond with a metal ion is, that is, an organic compound that serves as the organic ligand in the metal organic framework. Therefore, all the descriptions about the organic ligand in the above-described (1-1) can be referred to. The organic compounds capable of forming coordination bonds with metal ions preferably include an organic compound that serves as the group L1 in the metal organic framework. The organic compound that serves as the group L1 in the metal organic framework is one or more selected from the group consisting of polyvalent carboxylic acids represented by R(COOH)ₙ (R represents an n-valent group and n represents an integer of 2 or more) and oxalic acid. The organic compounds preferably include dicarboxylic acid or tricarboxylic acid, and more preferably include tricarboxylic acid. Also, with respect to the R, n, dicarboxylic acid, and tricarboxylic acid, all the descriptions in the above-described (1-1) can be referred to.

### (2-2) Ionic metal compound

The ionic metal compound is a compound including the metal ion in the metal organic framework and a counter anion thereof. The counter anion is an anion other than OH⁻. That is, the ionic metal compound used in the present disclosure includes no OH⁻ as a counter anion. The counter anion in the ionic metal compound is preferably at least one selected from NO₃⁻, SO₄²⁻, CH₃COO⁻, Cl⁻, Br⁻, and (OR²)⁻ (R² represents an organic group), and is particularly preferably NO₃⁻.

In addition, the metal ion in the ionic metal compound is the same as the metal ion in the above-described (1-2).

The ionic metal compound preferably includes a compound M1. In the compound M1, the metal includes at least one metal selected from elements (preferably, Cu, Al, Ti, V, Fe, Co, Ni, and Zr) in periods 3 to 6 and groups 2 to 14 of the periodic table, and the counter anion is at least one (preferably NO₃⁻) selected from the group consisting of NO₃⁻, SO₄²⁻, CH₃COO⁻, Cl⁻, Br⁻, and (OR²)⁻ (R² represents an organic group). The compound M1 is preferably a compound in which the metal is at least one metal selected from the group consisting of Cu, Al, Ti, V, Fe, Co, Ni, and Zr and the counter anion is NO₃⁻.

The ionic metal compound may further include a compound M2 which is at least one of alkali metal hydroxide and alkali metal azide, in addition to the compound M1.

### (2-3) Extrusion

Extrusion is performed ordinarily by supplying a mixture of the organic compound and the ionic metal compound (hereinafter, may be referred to as raw material mixture) into a barrel equipped with a screw, and rotating the screw. The screw may be a single -screw or a multi-shaft screw with two or more shafts. In the present disclosure, extrusion is performed under solvent-free and base-free conditions at a temperature of 60°C or higher. That is, neither a solvent nor a base is used from the start to the end of the extrusion. Needless to say, neither a solvent nor a base is included in the raw material mixture to be fed into an extruder. The temperature may be 60°C or higher at any stage from the start to the end of the extrusion, and is preferably 60°C or higher for a duration longer than or equal to two-thirds of the time required from the start to the end.

Being under solvent-free and base-free conditions means that the amount of a solvent per 100 parts by mass of the raw material mixture is 0.1 parts by mass or less (preferably 0.005 parts by mass or less, and more preferably 0 parts by mass), and the amount of base is 0.1 parts by mass or less (preferably 0.005 parts by mass or less, and more preferably 0 parts by mass).

The term "solvent" is not limited to a substance to be added with the intention of acting as a solvent, but it means to include any liquid such as water or an organic solvent.

Although a base can effectively act to increase the reactivity between the organic compound and the ionic metal compound, no base is used in the present disclosure. Examples of the base include NaOH, KOH, and LiOH.

The temperature at which extrusion is performed is preferably 70°C or higher, more preferably 90°C or higher, and further preferably 100°C or higher, and is preferably lower than 200°C and more preferably 190°C or lower. That is, the temperature at which extrusion is performed is preferably 70°C or higher and lower than 200°C, 90 to 190°C, or 100 to 190°C.

In addition, as the organic compound capable of forming a coordination bond with a metal ion and the ionic metal compound to be subjected to extrusion, the compounds on which milling processing using a vibration ball mill or the like has not been performed are preferably used.

The extruder to be used for extrusion includes, for example, a barrel equipped with a screw, a raw material supply portion for supplying a raw material or a raw material mixture into the barrel, and a discharge portion for discharging a reaction product obtained through extrusion. The screw may be a single-screw or a multi-screw with two or more shafts, and is preferably a twin-screw. In a case where the screw is the multi-screw with two or more shafts, a plurality of screws may rotate in the same direction, or at least one screw may rotate in a direction opposite to that of the remaining screws. However, the plurality of screws preferably rotate in the same direction.

The screw preferably includes a shaft part extending in one direction and a blade part formed helically around the shaft part, and can rotate around the axis of the shaft part. The rotation speed of the screw is, for example, 5 to 50 rpm and preferably 10 to 30 rpm. The ratio (L/D) of a length L to a diameter D of the screw including the blade part is preferably 15 to 40, and more preferably 20 to 35. The diameter D of the screw including the blade part is, for example, 10 to 20 mm.

The barrel may be configured such that a plurality of portions having individually adjustable temperatures are connected in the axial direction of the screw.

The discharge portion for discharging a reaction product obtained through extrusion is preferably provided with one or more nozzles, and the diameter of the nozzle is preferably 0.5 to 3 mm.

When the organic compound capable of forming a coordination bond with a metal ion and the ionic metal compound are fed into the extruder, the organic compound and the ionic metal compound may be mixed in advance and then fed into the extruder (i.e., a mixture of the organic compound and the ionic metal compound is fed into the extruder), or may be fed into the extruder simultaneously. However, it is preferable that the organic compound and the ionic metal compound are mixed in advance to efficiently promote the reaction.

In addition to the raw material supply portion, a side feed may be further provided on the discharge portion side with respect to the raw material supply portion along the axis of the screw.

In a mode in which the extruder is provided with the side feed, one of the organic compound capable of forming a coordination bond with a metal ion and the ionic metal compound may be fed through the raw material supply portion, and the other thereof may be fed through the side feed. By doing so, the raw material fed through the raw material supply portion has been sufficiently melted, and then can be mixed with the raw material fed through the side feed, thereby increasing the reaction efficiency.

In addition, the side feed is preferably provided with a local exhaust device. By doing so, gas and the like generated from the decomposition of the raw material and impurities can be recovered, whereby operational safety can be ensured.

Further, synthetic resin used as a raw material for chemical fibers may be fed through the side feed to produce a pellet including a MOF, and then the pellet may be processed into fibers to produce MOF-containing fibers. Examples of the synthetic resin include polyolefin-based resin, polyester-based resin, and polyamide-based resin.

In the production method of the present disclosure, before, during, and after the extrusion, it is preferable that a step of processing the raw material, the raw material mixture, or the reaction product at 200°C or higher is not included.

This application claims priority to Japanese Patent Application No. 2023 -035785 filed on March 8, 2023, the entire contents of Japanese Patent Application No. 2023-035785 filed on March 8, 2023 are incorporated herein by reference.

### EXAMPLES

Hereinafter, the present disclosure will be described more specifically by means of Examples. The present disclosure is not limited by the following Examples, and can also be carried out with appropriate modifications being made within the scope of the gist described above and below, and any of these modifications are included in the technical scope of the present disclosure.

### Examples 1 to 3

A mixture obtained by mixing 63 g of copper(II) nitrate trihydrate (Cu(NO₃)₂·3H₂O, produced by Tokyo Chemical Industry Co., Ltd.) and 37 g of 1,3,5-benzenetricarboxylic acid (produced by Tokyo Chemical Industry Co., Ltd.) in advance was supplied into a twin-screw extruder through a raw material feed port thereof, and a reaction product was obtained through a nozzle installed at a discharge portion. In a barrel of the extruder, to the direction from the raw material feed port to the discharge portion, portions including a raw material feed portion, a knead portion 1, a side feed portion, and a knead portion 2 were connected in this order, and had individually adjustable temperatures, and the internal volume of the barrel was about 100 ml.

The temperature conditions at each portion and the rotation rate of the screw are as shown in Table 1 below. In addition, the nozzle diameter of the nozzle installed at the discharge portion was 2 mm. The reaction product obtained through extrusion was then washed with 50 mL of methanol three times, and was dried under reduced pressure at 100°C for 24 hours.

### Comparative Example 1

A solution A obtained by dissolving 1.765 g of copper(II) nitrate trihydrate (Cu(NO₃)₂·3H₂O, produced by Tokyo Chemical Industry Co., Ltd.) in 24.4 g of ion-exchanged water, and a solution B obtained by dissolving 0.86 g of 1,3,5-benzenetricarboxylic acid (produced by Tokyo Chemical Industry Co., Ltd.) in 19.2 g of ethanol, were mixed at room temperature, and the mixture was allowed to stand at 120°C for 12 hours to age. The obtained solid precipitate was washed with 100 ml of ethanol, and the obtained filter cake was dried in a vacuum drying oven at 40°C for 11 hours, to obtain 1.02 g of a substance.

### Comparative Example 2

A solution obtained by dissolving 0.2 g of copper hydroxide (Cu(OH)₂, produced by Tokyo Chemical Industry Co., Ltd.) and 0.28 g of 1,3,5-benzenetricarboxylic acid (produced by Tokyo Chemical Industry Co., Ltd.) in 0.28 g of methanol was placed in a ball mill container made of zeolite and having a capacity of 20 ml, along with 10 zeolite balls (φ: 10 mm), and mixing was performed at a rotation rate of 400 rpm at room temperature. Processing using a ball mill, consisting of 5 minutes of rotation followed by a 5-minute pause, was repeated 30 times in total. Then, the obtained product was scraped off and collected with a spatula, and was dried in a vacuum drying oven at 40°C for 11 hours, to obtain 0.39 g of a substance.

### Comparative Example 3

A mixture of 42 g of copper hydroxide (Cu(OH)₂), 58 g of 1,3,5-benzenetricarboxylic acid, and 58 g of methanol was supplied into the same twin-screw extruder as those used in Examples 1 to 3 through the raw material feed port, to obtain a reaction product through the nozzle. The temperature conditions at each portion and the rotation rate of the screw are as shown in Table 1 below. The reaction product obtained through extrusion was then washed with 50 mL of methanol three times, and was dried under reduced pressure at 100°C for 24 hours.

**[Table 1]**

| | Raw material | | | | | | Extruding condition | | | | | |
|---|---|---|---|---|---|---|---|---|---|---|---|---|
| | Ionic metal compound | | Organic compound | | Solvent | | Temperature at raw material feed portion (°C) | Temperature at knead portion 1 (°C) | Temperature at side feed (°C) | Temperature at knead portion 2 (°C) | Temeperature at nozzle (°C) | Rotation rate (rpm) |
| | Kind | Amount (g) | Kind | Amount (g) | Kind | Amount (g) | | | | | | |
| Example 1 | Cu(NO₃)₂ ·3H₂O | 63 | 1,3,5-benzenetricarboxylic acid | 37 | None | | Room Temperature | 130 | 130 | 130 | 130 | 10 |
| Example 2 | Cu(NO₃)₂ ·3H₂O | 63 | 1,3,5-benzenetricarboxylic acid | 37 | None | | Room Temperature | 115 | 115 | 115 | 115 | 10 |
| Example 3 | Cu(NO₃)₂ ·3H₂O | 63 | 1,3,5-benzenetricarboxylic acid | 37 | None | | Room Temperature | 115 | 115 | 115 | 115 | 30 |
| Comparative example 1 | Cu(NO₃)₂ ·3H₂O | 1.765 | 1,3,5-benzenetricarboxylic acid | 0.86 | H₂O | 24.4 | Liquid phase method | | | | | |
| | | | 1,3,5-benzenetricarboxylic acid | | C₂H₅OH | 19.2 | | | | | | |
| Comparative example 2 | Cu(OH)₂ | 0.2 | 1,3,5-benzenetricarboxylic acid | 0.28 | CH₃OH | 0.28 | Ball milling method | | | | | |
| Comparative example 3 | Cu(OH)₂ | 42 | 1,3,5-benzenetricarboxylic acid | 58 | CH₃OH | 58 | Room Temperature | 130 | 130 | 130 | 130 | 10 |

The metal organic frameworks obtained in Examples and Comparative Examples were evaluated by the following method.

### (1) Measurement of half width of most intense peak

X-ray diffraction measurement was performed using an X-ray diffractometer: SmartLab manufactured by Rigaku Corporation under the following conditions.
Ray source: Cu
Measurement range: 2θ=3 to 40°
Step size: 0.01°
Scan speed: 3°/min
Measurement temperature: room temperature (25°C)

The position of the most intense peak was identified within the above-described range of 20, and the half width was determined by measuring an angle corresponding to half the intensity of the peak. In a case where the most intense peak overlaps with an adjacent peak and exhibits a left-right asymmetric shape, the half width may be determined by subtracting, from 2θ(P) of point P representing the position of the most intense peak, 2θ(Q) of point Q located on the non-overlapping side and corresponding to half the intensity of the peak (point P), and multiplying the obtained value (if the value is negative, an absolute value thereof is taken) by two.

### (2) Measurement of glass adhesion rate

(i) A commercially available glass tube (φ6 mm×1500 mm, AS ONE 3-1594-03, glass tube φ6, standard tube (STD)) was cut into the required number of 200 mm pieces by using a glass cutting tool such as an ampoule cutter.
(ii) A funnel was made using drug wrapping paper and tape.
(iii) Drug wrapping paper for weighing a sample was prepared, and the drug wrapping paper and the funnel made as in the above (ii) were weighed.
(iv) About 100 mg of the sample was weighed on the drug wrapping paper.
(v) An empty sample bottle for collecting the sample after measurement of a glass adhesion rate was prepared and weighed.
(vi) The above-described 200 mm glass tube was vertically erected, the funnel was set at the upper part of the glass tube, and the sample bottle was set at the lower part of the glass tube. A gap of about 10 mm was maintained between the bottom of the sample bottle and the lower end of the glass tube.
(vii) The sample was dropped from the drug wrapping paper into the funnel and passed through the inside of the glass tube.
(viii) The glass tube through which the sample passed was removed without applying vibration.
(ix) Since the sample that passed through the glass tube was collected in the sample bottle at the lower part, each of the drug wrapping paper, the funnel, and the sample bottle having therein the sample was weighed after the test.
(x) The glass adhesion rate was defined as the fraction of the weight of the sample adhered to the inside of the glass tube relative to that of the sample supplied from the drug wrapping paper to the inside of the glass tube through the funnel.

### (3) Desorption performance test

The amount of water desorbed from the metal organic framework pretreated under the following conditions was measured, by using Simultaneous Thermal Analyzer (TG-DTA: Thermogravimetry-Differential Thermal Analysis) manufactured by Rigaku Corporation.

Pretreatment condition: each metal organic compound was held at 25°C for 12 hours under an air atmosphere in which the humidity was adjusted so that the relative pressure was 0.5.

Desorption amount: after the above pre-treatment, the temperature was increased at a temperature increase rate of 5°C/min. while nitrogen was caused to flow, and the metal organic compound was held at 50°C for 30 minutes. A weight reduction amount W₂₅₋₅₀ in this range (25 to 50°C) was measured and this W₂₅₋₅₀ was divided by the weight of the sample subjected to the pretreatment to calculate the desorption amount (% by mass).

The results of the above-described (1) to (3) are shown in Table 2.

**[Table 2]**

| | Glass adhesion rate (%) | Half width of main peak (°) | Desorption amount (mass %) |
|---|---|---|---|
| Example 1 | 4.75 | 0.07 | 9.9 |
| Example 2 | 4.36 | 0.13 | 14.5 |
| Example 3 | 6.12 | 0.2 | 11.1 |
| Comparative example 1 | 20.88 | 0.185 | 8.3 |
| Comparative example 2 | 4.91 | 0.41 | 6.9 |
| Comparative example 3 | 12.4 | 0.25 | 1 |

### INDUSTRIAL APPLICABILITY

The metal organic framework of the present disclosure can be suitably used to adsorb and remove gas or organic molecules, and thus is useful. Examples of the gas include water (water vapor), carbon dioxide, hydrogen, carbon monoxide, oxygen, nitrogen, hydrocarbon having 1 to 4 carbon atoms, noble gas, hydrogen sulfide, ammonia, sulfur oxide, nitrogen oxide, and siloxane. Examples of the organic molecule include hydrocarbon having 5 to 8 carbon atoms, alcohol having 1 to 8 carbon atoms, aldehyde having 1 to 8 carbon atoms, carboxylic acid having 1 to 8 carbon atoms, ketone having 1 to 8 carbon atoms, amine having 1 to 8 carbon atoms, ester having 1 to 8 carbon atoms, and amide having 1 to 8 carbon atoms. The organic molecule may include an aromatic ring.

## Claims

1. A metal organic framework comprising
an organic ligand and a metal ion, wherein
in a diffraction spectrum obtained from X-ray diffraction measurement within a range of 2θ=3 to 40°, a half width of a most intense peak is 0.05 to 0.225°, and
a glass adhesion rate calculated by the following measurement method is 0 to 20% by mass,
[measurement of glass adhesion rate]
when 100 mg of a sample of the metal organic framework is placed into a vertically erected glass tube having a diameter of 6 mm and a length of 200 mm through an upper end thereof, a glass adhesion rate is defined as a mass fraction of the sample adhered to an inside of the glass tube relative to a mass of the placed sample.

2. The metal organic framework according to claim 1, wherein
the organic ligand includes at least one selected from the group consisting of carboxylates represented by R(COO⁻)ₙ (R represents an n-valent group and n represents an integer of 2 or more) and an oxalate ion (COO⁻)₂.

3. The metal organic framework according to claim 1 or 2, wherein
the metal ion includes an ion of at least one metal selected from elements in periods 3 to 6 and groups 2 to 14 of the periodic table.

4. The metal organic framework according to claim 1, wherein
the organic ligand includes at least one selected from R(COO⁻)₃ (R represents an aromatic hydrocarbon group having no functional group and R has 6 or more and 10 or less carbon atoms), and the metal ion includes an ion (particularly, a Cu ion) of at least one metal selected from the group consisting of Cu, Al, Ti, V, Fe, Co, Ni, and Zr.
